Europäisches Patentamt

European Patent Office

Office européen des brevets

(19)

(11) Veröffentlichungsnummer: **0 052 343**

**B1**

(12) **EUROPÄISCHE PATENTSCHRIFT**

(45) Veröffentlichungstag der Patentschrift: 02.03.88

(51) Int. Cl.⁴: **H 02 K 29/00**

(21) Anmeldenummer: 81109634.6

(22) Anmeldetag: 11.11.81

(54) Elektrische Maschine.

(30) Priorität: 11.11.80 DE 8030107 u

(43) Veröffentlichungstag der Anmeldung:
26.05.82 Patentblatt 82/21

(45) Bekanntmachung des Hinweises auf die
Patenterteilung:
02.03.88 Patentblatt 88/09

(84) Benannte Vertragsstaaten:
AT BE CH DE FR GB IT LI

(56) Entgegenhaltungen:
BE-A- 867 436
CH-A- 526 221
DE-A-2 930 649
GB-A-2 005 926
US-A-3 707 924

(73) Patentinhaber: Magnet-Motor Gesellschaft für
magnetmotorische Technik mbH
Moosstrasse 14
D-8130 Starnberg (DE)

(72) Erfinder: Heidelberg, Götz, Dipl.-Phys.
Am Hügel 16
D-8136 Percha (DE)

(74) Vertreter: Klunker, Hans-Friedrich, Dr. et al
Patentanwälte Klunker . Schmitt-Nilson . Hirsch
Winzererstrasse 106
D-8000 München 40 (DE)

Courier Press, Leamington Spa, England.

EP 0 052 343 B1

## Beschreibung

Die Erfindung bezieht sich auf eine elektrische Maschine, insbesondere einen Elektromotor, mit einem Stator, der ringförmig verteilte und mit Stromleitern versehene Statorpole darbietet, mit einem Läufer, der mit ringförmig verteilten und mit den Statorpolen zusammenwirkenden Dauermagneten versehen ist, mit mindestens einem Sensor, der die Relativstellung von Stator und Läufer erfaßt, und mit einer sensorgesteuerten, elektronischen Einrichtung zum antriebsgerechten Schalten der Statorpol-Stromleiter in Abhängigkeit von der Stator-Läufer-Relativstellung, wobei sich der Mittenabstand benachbarter Dauermagnetpole vendem Mittenabstand benachbarter Statorpole enterscheidet.

Ein Elektromotor dieses Types ist aus DE—A—23 30 649 bekannt.

Derartige Elektromotoren benötigen keine verschleißgefährdeten und störungsanfälligen Schliefkontakte und keinen Kollektor, weil die jeweils zeitgerechte Einschaltung der einzelnen Stromleiter auf elektronische Weise erfolgt. Eine unterschiedliche Polteilung von Stator und Läufer erbringt die Vorteile eines sicheren Motoranlaufs, eines gleichmäßigen Motorlaufs und einer gleichmäßigen Netzbelastung. Derartige Elektromotoren lassen sich mit guter Regelbarkeit und hohem Wirkungsgrad bauen.

Die erfindungsgemäße elektrische Maschine ist dadurch gekennzeichnet, daß mehrere sensorgesteuerte, elektronische Schalteinrichtungen zum jeweils gleichzeitigen Schalten einer Teilanzahl von benachbarten Statorpolen vorgesehen sind, die trotz des genannten Polmittenabstandsunterschieds eine im wesentlichen Relativstellung eu den Dauermagnetpolen haben. Bei des erfindungsgemäßen elektrischen Maschine werden nicht alle Statorpole durch eine gemeinsame elektronische Schalteinrichtung geschaltet, sondern sind mehrere elektronische Schalteinrichtungen jeweils für eine Teilanzahl von benachbarten Statorpolen vorgesehen, auch wenn sich diese nur in im wesentlichen gleicher Relativstellung zu Dauermagnetpolen befinden. Dadurch müssen von der jeweiligen Schalteinrichtung nur geringeere Ströme bzw. Leistungen bewältigt werden, wodurch deren Preis ganz wesentlich überproportional sinkt. Damit einher geht die Veringerung des Kühlaufwandes für die Schalteinrichtungen, die Erhöhung der Redundanz bzw. Zuverlässigkeit, da der Ausfall einzelner Schalteinrichtungen die Gesamtfunktion nicht wesentlichen stört, und eine Vereinfachung der Wartung durch Austausch vergleichsweise billiger einzelner Schalteinrichtungen. Schließlich kommt man auch insgesamt in einen niedrigeren Spannungsbereich, da die "Gegen-EMK" progeschalteten Stromleiter klein bleibt und man sich in einer vom Isolationsaufwand und damit vom Preisaufwand her günstigen VDE-Klasse halten kann.

In den meisten Fällen sind die Stromleiter in Form von Spulen bzw. Wicklungen vorhesehen. Wenn durchgehend von einem Einschalten der Stromleiter bzw. Spulen gesprochen wird, soll diese Ausdrucksweise das nachfolgende, zeitgerechte, elektronische Ausschalten der Stromleiter bzw. Spulen mit umfassen.

Nach dem Prinzip der Erfindung kann auch ein Generator aufgebaut werden.

Die verwendeten Begriffe "Stator" und "läufer" sollen nicht bedeuten, daß der Stator unbedingt der unbewegt bleibende Teil der elektrischen Maschine und der Läufer unbedingt der sich bewegende Teil der elektrischen Maschine ist, vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daß sich sowohl Stator als auch Läufer mit unterschiedlichen Geschwindigkeit bewegen. Der Fall des unbewegt bleibenden Stators ist jedoch bevorzugt, da diesem Strom zugeführt werden muß.

Bevorzugte Ausgestaltungen der Erfindung sind in den Ansprüchen 2 bis 10 angegeben.

Als Sensoren sind Hallgeneratoren besonders bevorzugt, da diese konstruktiv bequem auf die Magnetfelder der Dauermagnete ansprechend angeordnet werden können. Es sind aber auch andere Sensoren einsetzbar, beispielsweise Reedkontakte, Photozellen, Ultraschallsensoren, Gasstromsensoren, Induktionssensoren oder Permeabilitätssensoren.

Die Weiterbildungen gemäß Anspruch 4 und 5 ergeben elektrische Maschinen mit an die jeweiligen Einsatzbedingungen anpaßbarer Charakteristik und besonders gutem, vielfältigem Regelverhalten.

Bei der Erfindung werden bevorzugt hochkoerzitive Dauermagnete aus Legierung eines Elements aus der Gruppe der seltenen Erden, insbesondere Samarium, mit Kobalt eingesetzt. Solche Magnete erlauben es, mit vergleichsweise großen Spaltweiten zu arbeiten. Sie zeichnen sich ferner durch eine praktisch gerade Kennlinie im vierten Quadranten aus, wodurch sie gegen Spaltweitenänderungen und Gegenfelder, beispielsweise durch Elektromagnete, relativ unempfindlich sind.

Die sogenannte einphasige Auslegung gemäß Anspruch 7 hat den Vorteil, daß unter sich gleiche Spulen bzw. Wicklungen eingesetzt werden können, die sich nicht gegenseitig überlappen bzw. überkreuzen, so daß keine Platz benötigenden Wickelköpfe entstehen. Das ermöglicht eine Serienfertigung der Spulen bzw. Wicklungen und erleichtert ihre Austauschbarkeit.

Wenn die Dauermagnete radial außerhalb der Statorpole angeordnet sind, rückt die eigentliche Wirkfläche der elektrischen Maschine, nämlich der Ringspalt zwischen den Dauermagneten und den Statorpolen, radial weiter nach außen, weil die Dauermagnete im allgemeinen radial weniger Platz benötigen als die Statorpole mit den Stromleitern bzw. Wicklungen. Dies führt zur Möglichkeit der Unterbringung einer gemessen am Bauvolumen besonders hohen Anzahl von Dauermagnetpolen und Statorpolen sowie zu einem größeren Hebelarm der in der Wirkfläche herrschenden Kräfte relativ zur Drehachse der Machine. Außerdem werden die Dauermagnete durch die Fliehkraft nach außen gegen ihre Anbringungsfläche gedrückt, was ihre Befestigung vereinfacht. Auf diese Weise läßt sich ein hohes Verhältnis von Leistung bzw. Drehmoment zu Gewicht bzw. Bauvolumen erreichen.

Weitere Ausführungsformen der offenbasten elektrischen Maschine werden in der Teilanmeldung Nr. 86 112073.1 (Veröffenflichungs—Nr. 0216202) beansprucht.

Die Erfindung wird im folgenden anhand schematisch dargestellter Ausführungsbeispiele noch näher erläutert. Es zeigen:

Fig. 1 bis 4 grundsätzliche Konfigurationen eines Elektromotors;

Fig. 5 einen Querschnitt durch einen Elektromotor.

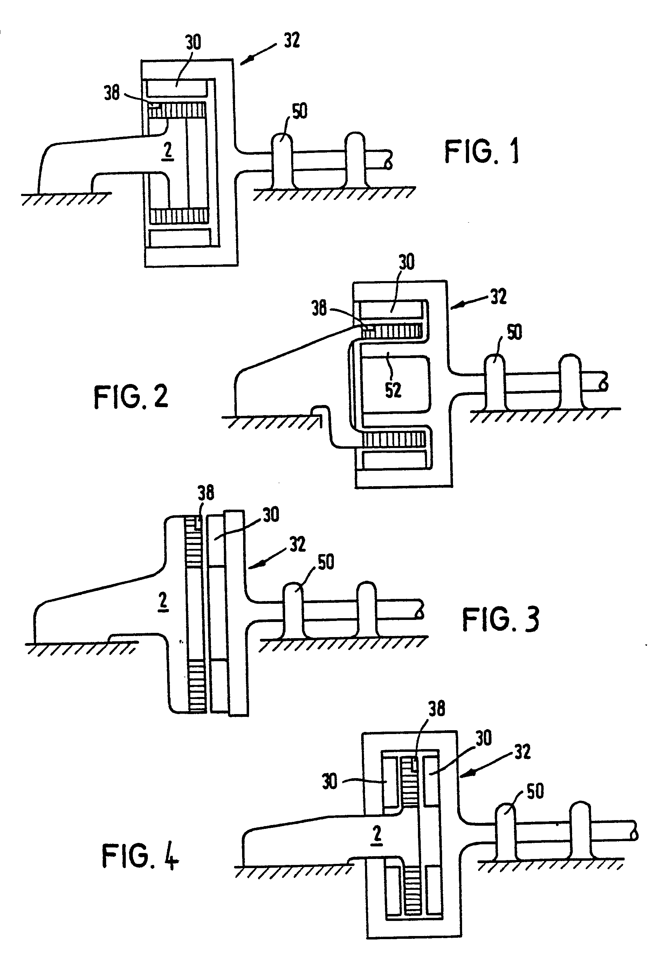

In den Figuren 1 bis 4 sind einige grundsätzliche Konfigurationen von Elektromotoren dargestellt. Der in diesen Figuren rechte Teil des jeweiligen Elektromotors ist jeweils mit Lagern 50 drehbar gelagert und bildet den Läufer. Bei der Ausführungsform nach Fig. 1 ist der eigenliche Läuferbereich im wesentlichen becherförmig, wobei am Innenumfang des Bechers ringförmig Dauermagnete mit wechselnder Polung ringförmig verteilt sind. Der Stator 2 hat die Form einer Walze, die am Außenumfang lamelliert ist, wobei die einzelnen Lamellen axial aneinandergepackt sind. Der Stator 2 trägt am Außenumfang axial verlaufende und zeichnerisch nicht dargestellte Stromleiter in geeigneter Teilung. Der Bereich des Läufers 32, an dem die Dauermagnete 30 befestigt sind, besteht aus ferromagnetischem Material als Rückschlußweg. Die Stromleiter können beispielsweise in axial verlaufenden Nuten des Stators eingelegt sein.

Der Stator 2 trägt am Außenumfang ringförmig verteilt mehrere Hallsonden 38, die mit den Dauermagneten 30 zusammenwirken. Sobald hallsondenseitig festgestellt wird, daß sich ein läuferseitiger Teil und ein statorseitiger Teil mehrerer magnetischer Kreise in antriebsgerechter Relativlage befinden, werden die Stromleiter bzw. die Spulen dieser Kreise selbsttätig eingeschaltet.

Die Ausführungsform nach Fig. 2 unterscheidet sich von der Ausführungsform nach Fig. 1 dadurch, daß der radial innerhalb des Ringes der Dauermagnete 30 angeordnete Statorbereich becherförmig hineinragt und daß radial innerhalb dieses Statorbereichs ein ringförmiger Vorsprung 52 des Läufers 32 unter Einhaltung eines geringen Luftspalts zum Statorring vorgesehen ist. Auf diese Weise ist der vorher auf den Stator 2 entfallende Teil der magnetischen Kreise hauptsächlich auf den Ringvorsprung 52 verlagert, der mit gleicher Drehzahl wie die Dauermagnete 30 rotiert. Auf diese Weise lassen sich die Wirbelstromverluste reduzieren. Der radial zwischen den Dauermagneten 30 und dem Ringvorsprung 52 befindliche Statorbereich kann auch in Form von sogenannten Luftstromleitern bzw. Luftspulen oder in Form von Stromleitern bzw. Spulen, deren Zwischenräume unter Freilassung der am Außenumfang und am Innenumfang liegenden Leiteroberflächen mit einer ferromagnetisches Pulver enthaltenden Vergußmasse gefüllt sind, ausgebildet sein.

Die Ausführungsform nach Fig. 3 unterscheidet sich von der Ausführungsform nach Fig. 1 dadurch, daß der Läufer 32 als Scheibe ausgebildet ist und daß die Dauermagneten axial auf der den Lagern 50 abgewandten Stirnseite der Scheibe ringförmig verteilt angeordnet sind. Auch der Stator 2 ist schiebenförmig und trägt das Lamellenpaket und die nicht dargestellten Stromleiter auf seiner dem Läufer 32 zugewandten Stirnseite. Die einzelnen in Umfangsrichtung verlaufenden Lamellen des Lamellenpakets sind radial einander benachbart.

Die Ausführungsform nach Fig. 4 unterscheidet sich von der Ausführungsform nach Fig. 3 dadurch, daß der Läufer 32 zwei am Außenumfang miteinander verbundene Scheiben aufweist, zwischen denen sich der als Scheibe ausgebildete Stator befindet. Auf der den Lagern 50 abgewandten Scheibe des Läufers 32 kann entweder ein mitrotierender, magnetischer Rückschluß nach dem Prinzip der Ausführungsform gemäß Fig. 2 vorgesehen sein, oder es kann, wie zeichnerisch dargestellt, dort eine Reihe ringförmig verteilter Dauermagnete 30 stirnseitig angebracht sein. Im letzteren Fall wirkt also die Statorscheibe auf beidem Stirnseiten mit Dauermagneten 30 zusammen, so daß sich ein Ausgleich der axial wirkenden, magnetischen Anziehungskräfte ergibt. Die Ausführungsform gemäß Fig. 4 kann durch Hinzufügung weiterer Statorscheiben und Läuferscheiben erweitert werden. Der Statorbereich zwischen den beiden mit Dauermagneten 30 bestückten Läuferscheiben kann, wie bei der Ausführungsform nach Fig. 2 beschrieben, mit Luftstromleitern bzw. Luftspulen oder Verugßmasse gefüllten Leitern bzw. Spulen verwirklicht sein.

Bei den Ausführungsformen nach Fig. 1 bis 4 sind die Mittenabstände der Stromleiter des Stators 2 bzw. die Mittenabstände von Statorpolen und die Mittenabstände der Dauermagnete 30, jeweils in Umfangsrichtung, im wesentlichen aufeinander abgestimmt, wobei allerdings eine leicht unterschiedliche Teilung am Stator und am Läufer zur Vermeidung des sogenannten Nuteffekts vorgesehen ist.

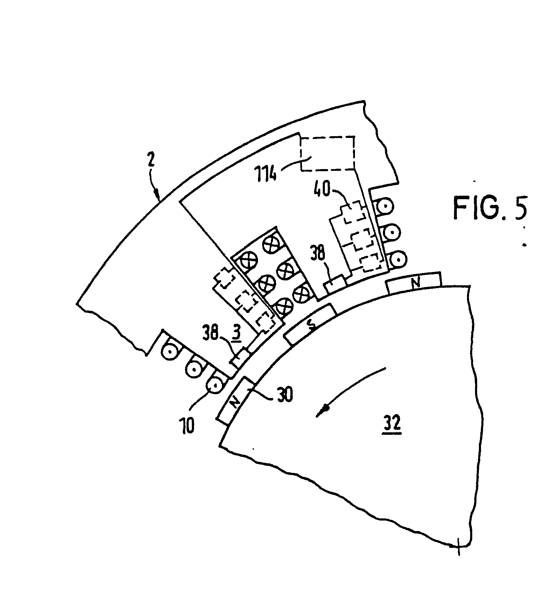

In Fig. 5 ist ein Elektromotor dargestellt, der nach dem in Fig. 1 beschriebenen Grundprinzip, allerdings mit radial innerhalb des Stators angeordneten Läufer, aufgebaut ist. Analog kann man aber auch entsprechend dem Grundprinzip von Fig. 1 den Stator innerhalb des Läufers anordnen, wodurch der Ringspalt zwischen Stator und Läufer weiter nach außen rückt und die Dauermagnete durch die Fliehkraft gegen ihrer Anbringungsfläche gedrückt werden.

Der insgesamt zylindrische Stator 2 besteht aus einem axial zusammengefügten Paket von—grob gesprochen—ringförmigen Blechen aus ferromagnetischem Material. Der Stator 2 weist über den Innenumgang verteilt nach innen ragende Statorpole bzw. Statorzähne 3 auf Jeder Statorzahn 3 weist radial aufeinanderfolgend drei Spulen 10 auf. Jede Spule 10 besteht aus zwei Axialästen und zwei stirnseitigen, die Axialäste verbindenden Ästen. Jede Spule ist aus mehreren, voneinander isolierten Drähten gewickelt, in Fig. 5 jedoch als einziger, dicker Draht dargestellt.

Der innerhalb des Stators 2 rotierende Läufer 31 trägt an seinem Außenumfang ringförmig verteilt eine Reihe von in geradzahliger Anzahl vorgesehen Dauermagneten 30 wechselnder Polung, die sich axial erstrecken. Aus weiter unten noch deutlicher werdenden Gründen sind die untereinander gleichen Abstände der Statorzähne 3, gemessen in Umfangsrichtung von Mitte zu Mitte, derart kleiner oder größer als die analog gemessenen Mittenabstände der Dauermagneten 30, daß ein oder zwei Polzähne 3 mehe oder weniger als Dauermagnete vorhanden sind.

An jedem Polzahn 3 ist eine auf die Dauermagneten 30, und zwar sowohl auf Nordpole als auch auf Südpole, ansprechende Hallsonde 38 vorgesehen. Stellt die Hallsonde 38 eine antriebsgerechte Relativstellung zwischen einem Dauermagneten 30 und dem dieser Hallsonde 38 zugeordneten Statorzahn 3 fest, werden eine, zwei oder alle drei Spulen 10 dieses Statorzahns 3 mittels der mit 40 angedeuteten Schalteinrichtungen eingeschaltet. Mit einem Steuerteil 114 kann Einfluß darauf genommen werden, ob alle drei Spulen 10 des betreffenden Statorzahns 3 eingeschaltet werden oder nur zwei Spulen 10 oder nur eine Spule 10. Wird dem Motor ein hohes Drehmoment abverlangt, werden alle drei Spulen 10 eingeschaltet, bei niedrigerem verlangten Drehmoment weniger Spulen 10. Die Steuereinheit kann zusätzlich die Funktion haben, die einzelnen Spulen 10 jedes Statorzahns 3 von Parallelschaltung in Reihenschaltung umzuschalten und umgekehrt. Dies kann auch bei der weiter unten beschriebenen Möglichkeit der gleichzeitigen Schaltung mehrerer Spulen an unterschiedlichen Umfangsstellen geschehen. Die Reihenschaltung empfiehlt sich bei kleiner Drehzahl und homen Drehmoment, die Parallelschaltung bei hoher Drehzahl und kleinem Drehmoment.

Statt die Spulen 10 jedes Statorzahns 3 jeweils über eine eigene Schalteinrichtung 40 einzuschalten, kann man gemäß der Anweisung des Anspruchs 1 mit einer Schalteinrichtung 40 eine Gruppe benachbarter Statorpole schalten, die sich nur in im wesentlichen gleicher Relativstellung zu Dauer magnetpolen befinden.

Die Spulen 10 jedes Statorzahns 3 werden, je nachdem ob sich ein Nordpol eines Dauermagneten 30 oder ein Südpol eines Dauermagneten 30 gegenüber dem Statorzahn befindet, mit unterschiedlicher Stromrichtung eingeschaltet. Dies wird von den Schalteinrichtungen 40 gesteuert.

Die Spulen von in Umfangsrichtung benachbarten Statorzähnen 3 sind mit entgegengesetzter Stromrichtung beaufschlagt, wie in Fig. 5 angedeutet.

Bei der Ausführungsform gemäß Fig. 5 ist die sogenannte einphasige Auslegung verwirklicht: Wenn zwei in Umfangsrichtung benachnarte Dauermagnete 30 zwei Statorzähnen 3 gegenüberstehen, befindet sich zwischen diesen beiden Statorzähnen 3 kein weiterer Statorzahn. Aufgrund der einphasigen Auslegung gibt es keine sogenannte Wickelköpfe an den axialen Stirnseiten des Stators 2, an denen sich bei mehrphasiger Auslegung die Stromleiter der verschiedenen Phasen kreuzen würden. Vielmehr können die Spulen 10 unter sich gleich ausgebildet sein und auf die Statorzähne 3 aufgesteckt werden, oder es können die unter sich gleichen, mit Spulen 10 versehenen Statorzähne 3 in den Stator einzeln eingesetzt werden.

Es sei ferner ausdrücklich betont, daß sich das Ausführungsbeispiel der Fig. 5 auch dahingehend abwandeln läßt, daß pro Statorzahn 3 nicht ein radial geschichtetes Paket von mehreren Spulen 10 vorhanden ist, sondern nur eine einzige Spule 10.

Wenn man über den Umfang zwei Statorzähne 3 mehr hat als Dauermagnetpole, dann tritte eine identische Relativstellung von Dauermagnetpolen und Statorzahnpolen immer gleichzeitig an zwei Stellen des Umfangs des Motors auf. Man kann die Spulen dieser beiden Stellen mit einer einzigen Schalteinrichtung 40 zugleich schalten. Analoges gilt für größere Differenzen in der Zahl der Statorzähne 3 und der Dauermagneten 30.

Statt einer einzigen Hallsonde 38, die sowohl auf magnetische Nordpole als auch auf magnetische Südpole anspricht, kann man auch axial nebeneinander zwei Hallsonden vorsehen, von denen die eine nur auf Nordpole anspricht und die andere nur auf Südpole.

**Patentansprüche**

1. Elektrischen Maschine mit einem Stator (2), der ringförmig verteilte und mit Stromleitern (10) versehene Statorpole (3) darbietet, mit einem Läufer (32), der mit ringförmig verteilten und mit den Statorpolen (3) zusammenwirkenden Dauermagneten (30) versehen ist,

mit mindestens einem Sensor (38), der die Relativstellung von Stator (2) und Läufer erfaßt (32), und mit einer sensorgesteuerten, elektronischen Einrichtung zum antriebsgerechten Schalten der Statorpol-Stromleiter (10) in Abhängigkeit von der Stator-Läufer-Relativstellung,

wobei sich der Mittenabstand benachbarter Dautermagnetpole (30) von dem Mittenabstand benachbarter Statorpole (3) unterscheidet,

dadurch gekennzeichnet, däß mehrere sensorgesteuerte, elektronische Schalteinrichtungen (40) zum jeweils gleichzeitigen Schalten, einer Teilanzahl von benachbarten Statorpolen (3) vorgesehen sind, die trotz des genannten Polmittenabstands-Unterschieds eine im wesentlichen gleiche Relativstellung zu den Dauermagnetpolen (30) haben.

2. Elektrische Maschine nach Anspruch 1, dadurch gekennzeichnet, daß sich die Anzahl der Statorpole (3) und die Anzahl der Dauermagnetpole um 1 oder 2 unterscheiden.

3. Elektrische Maschine nach einem der Ansprüche 1 bis 2, dadurch gekennzeichnet, daß als Sensoren (38) Hall-generatoren vorgesehen sind.

4. Elektrische Maschine nach einem der Ansprüche 1 bis 3, dadurch gekennzeichnet, daß pro Statorpol (3) mehrere, gesondert schaltbare Stromleiter (10) vorgesehen sind.

5. Elektrische Maschine nach einem der Ansprüche 1 bis 4, dadurch gekennzeichnet, daß einem Statorpol (3) oder verschiedenen Statorpolen (3) zugeordnete Stromleiter (10) wahlweise in Reihenschaltung oder in Parallel-schaltung schaltbar sind.

6. Elektrische Maschine nach einem der Ansprüche 1 bis 5, dadurch gekennzeichnet, daß Dauermagnete (30) aus einer Legierung auf der Basis seltener Erden, insbesonder Samarium, mit Kobalt vorgesehen sind.

7. Elektrische Maschine nach einem der Ansprüche 1 bis 6, dadurch gekennzeichnet, daß jeder Statorpol (3) mit einer eigenen Stromleiterwicklung (10) versehen ist, wobei die Stromleiterwicklungen (10) der Statorpole (3) untereinander gleich ausgebildet sind.

8. Elektrische Maschine nach einem der Ansprüche 1 bis 7, dadurch gekennzeichnet, daß der Stator (2) mit Statorzähnen ausgebildet ist, die im mit Stromleiterwicklungen (10) versehenen Zustand in den Stator (2) eingesetzt sind.

9. Elektrische Maschine nach einem der Ansprüche 1 bis 8, dadurch gekennzeichnet, daß die Dauermagnetpole radial außerhalb der Statorpole (3) angeordnet sind.

10. Elektrische Maschine nach Anspruch 9, dadurch gekennzeichnet, daß der Läufer (32) becherförmig ausgebildet ist und die Dauermagnete (30) am Innenumfang des Läufers (32) befestigt sind.

**Revendications**

1. Machine électrique comportant un stator (2) présentant des pôles de stator (3) répartis en anneau et munis de conducteurs (10), un rotor (32) muni d'aimants permanents (30) répartis en anneau et coopérant avec les pôles de stator (3), au moins un capteur (38) qui saisit la position relative du stator (2) et du rotor (32), et un dispositif électronique commandé par capteur pour mettre en circuit, conformément à l'entraînement, les conducteurs des pôles de stator (10) en fonction de la position relative stator-rotor, la distance entre centres de pôles d'aimants permanents (30) voisins différent de la distance entre centres de pôles de stator (3) voisins, caractérisée en ce qu'on prévoit plusieurs dispositifs de commande électroniques pour mettre simultanément en circuit une partie des pôles de stator (3) voisins, qui, malgré la différence précitée entre les centres des pôles, ont une position relative sensiblement identique par rapport aux pôles d'aimants permanents (30).

2. Machine électrique selon la revendication 1, caractérisée en ce que le nombre des pôles de stator (3) et le nombre de pôles d'aimants permanents différent de 1 ou de 2.

3. Machine électrique selon l'une des revendications 1 à 2, caractérisée en ce qu'on prévoit comme capteurs (38), des générateurs de Hall.

4. Machine électrique selon l'une des revendications 1 à 3, caractérisée en ce qu'on prévoit par pôle de stator (3) plusieurs conducteurs (10) pouvant être mis en circuit séparément.

5. Machine électrique selon l'une des revendications 1 à 4, caractérisée en ce qu'on peut mettre en circuit au choix en série ou en parallèle des conducteurs (10) associés à un pôle de stator (3) ou à différents pôles de stator (3).

6. Machine électrique selon l'une des revendications 1 à 5, caractérisée en ce qu'on prévoit des aimants permanents (30) en un alliage à base de terres rares, notamment du samarium, et de cobalt.

7. Machine électrique selon l'une des revendications 1 à 6, caractérisée en ce que chaque pôle de stator (3) est muni d'un enroulement de conducteurs propre (10), les enroulements de conducteurs (10) des pôles de stator (3) étant identiques entre eux.

8. Machine électrique selon l'une des revendications 1 à 7, caractérisée en ce que le stator (2) est réalisé avec des dents de stator qui sont placées dans le stator (2) une fois pourvues d'enroulements de conducteurs (10).

9. Machine électrique selon l'une des revendications 1 à 8, caractérisée en ce que les pôles des aimants permanents sont disposés radialement à l'extérieur des pôles de stator (3).

10. Machine électrique selon la revendication 9, caractérisée en ce que le rotor (32) est réalisé en forme de godet et que les aimants permanents (30) sont fixés sur la périphérie intérieure du rotor (32).

**Claims**

1. An electric machine, comprising:
a stator (2) having annularly distributed stator poles (3) provided with current conductors (10),
a rotor (32) provided with annularly distributed permanent magnets (30) cooperating with the stator poles (3),
at least one sensor (38) sensing the relative position of stator (2) and rotor (32), and
a sensor-controlled electronic means for drive-effective switching of the stator pole current conductors (10) depending on the relative position of stator (2) and rotor (32),
with the centre-to-centre spacing between adjacent permanent magnet poles (30) being different from the centre-to-centre spacing between adjacent stator poles (3),
characterized in that there is provided a plurality of sensor-controlled electronic switching means (40), each for simultaneously switching a partial number of adjacent stator poles (3) which, despite the difference in the pole centre-to-centre spacing mentioned, have a substantially identical relative position with respect to the permanent magnet poles (30).

2. An electric machine according to claim 1, characterized in that the number of the stator poles (3) and the number of the permanent magnet poles differ by 1 or 2.

3. An electric machine according to any one of claims 1 to 2, characterized in that Hall generators are provided as sensors (38).

4. An electric machine according to any one of claims 1 to 3, characterized in that several, separately switchable current conductors (10) are provided for each stator pole (3).

5. An electric machine according to any one of claims 1 to 4, characterized in that current conductors (10) associated with one stator pole (3) or different stator poles (3) are selectively switchable in series connection or in parallel connection.

6. An electric machine according to any one of claims 1 to 5, characterized in that permanent magnets (30) are provided consisting of an alloy based on rare earths, in particular samarium, and cobalt.

7. An electric machine according to any one of claims 1 to 6, characterized in that each stator pole (3) is provided with a current conductor coil (10) of its own, with the current conductor coils (10) of the stator poles (3) being of mutually identical design.

8. An electric machine according to any one of claims 1 to 7, characterized in that the stator (2) is formed with stator teeth which, in the condition provided with current conductor coils (10), are inserted into the stator (2).

9. An electric machine according to any one of claims 1 to 8, characterized in that the permanent magnet poles, are disposed radially outside of the stator poles (3).

10. An electric machine according to claim 9, characterized in that the rotor (32) is cup-shaped and the permanent magnets (30) are secured to the inner circumference of the rotor (32).

FIG. 1

FIG. 2

FIG. 3

FIG. 4

FIG. 5